# EUROPÄISCHE PATENTANMELDUNG

(11) **EP 2 862 448 A1**
(43) Veröffentlichungstag der Anmeldung: **22.04.2015**
(21) Anmeldenummer: 13188721.8
(22) Anmeldetag: 15.10.2013
(51) Int. Cl.: A23F 5/14, B65D 85/804

(54) **Wasserlösliche Kaffeezubereitungen**

(71) Anmelder: DMK Deutsches Milchkontor GmbH, 27404 Zeven (DE)
(72) Erfinder: Mintus, Thomas, 27404 Zeven (DE); Hahn, Michael, 27404 Zeven (DE)
(74) Vertreter: Fabry, Bernd

(57) **Zusammenfassung**

Vorgeschlagen werden lösliche Kaffeezubereitungen, die sich dadurch auszeichnen, dass sie als Pulver vorliegen, bei denen die einzelnen Kaffeepartikel vollständig oder zumindest anteilig mit einem Überzug versehen sind, der sich in Wasser verzögert auflöst, wobei der Überzug mindestens 50 Gew.-% bezogen auf das Kaffeepulver ausmacht.

## Beschreibung

### Gebiet der Erfindung

Die Erfindung befindet sich auf dem Gebiet der Kaffeezubereitungen und betrifft ein beschichtetes Kaffeepulver sowie seine Herstellung.

### Stand der Technik

In den letzten Jahren hat die Nespresso-Technologie den Kaffeemarkt revolutioniert. Auch wenn es für Kaffeeliebhaber nach wie vor nichts besseres gibt, als Kaffee frisch aus Bohnen zuzubereiten, weiß doch andererseits auch eine Vielzahl von Verbrauchern ein System zu schätzen, bei dem man lediglich ein Kaffeepad in eine Maschine einlegen muss und wenige Sekunden später hat man einen Kaffee in der Hand, der geschmacklich wenig zu wünschen übrig lässt. Zu der Zeitersparnis kommt vor allem hinzu, dass es inzwischen zahllose Kaffeevarianten gibt und man sich je nach Stimmung morgens für einen starken Espresso, mittags für einen Cappuccino und Abends vielleicht für einen Café au lait entscheiden kann.

Gerade Kaffeespezialitäten wie beispielsweise Cappuccino oder Latte Macchiato erfreuen sich dabei zunehmender Beliebtheit. Sie bestehen im Wesentlichen aus zwei Komponenten, nämlich zum einem dem löslichen Kaffeepulver und zum anderen der Milchschaumkomponente, die üblicherweise auch als Pulver vorliegt. Diese Zubereitungen sind indes nicht völlig befriedigend. Beim Auflösen des Cappuccino Pulvers in heißem Wasser fällt nämlich auf, dass sich der Schaum infolge des Kaffeeanteils braun verfärbt. Auch wenn dies für den Geschmack unerheblich ist, unterscheidet sich ein solches Produkt doch optisch ganz entscheidend von einem klassischen Cappuccino, bei dem der Schaum erst nachträglich hinzugefügt wird.

Naheliegend wäre es an dieser Stelle, die Bestandteile der Zubereitung zu trennen und eben zunächst den Kaffee herzustellen und dann den Milchschaum. Dies entspricht aber gerade nicht dem Verbraucheranspruch, entweder nur ein Produkt in heißem Wasser aufzulösen oder nur ein Pad in eine entsprechende Maschine einzulegen.

In diesem Zusammenhang sei auf die Europäische Patentschrift **EP 2233013 B1** (Kraft) verwiesen, aus der das Beschichten von Kaffeepulvern mit geringen Mengen an Tee-Extrakten, Polysacchariden, Proteinen und Zuckern bekannt ist. Der Schrift nicht zu entnehmen sind jedoch Kaffeepulver die gerade mit sehr großen Mengen an löslichen Kohlenhydraten beschichtet sind. In der Japanischen Patentanmeldung **JP 4 071446 A2** (Isamu) wird vorgeschlagen, zur Geschmacksverbesserung Kaffeepulver mit verschiedenen Auszügen zu beschichten. In die gleiche Richtung geht die niederländische Patentanmeldung **NL 8800618 A1** (Douwen Egberts) gemäß der Kaffeepulver mit karamellisiertem Zucker beschichtet wird. In gleicher Weise empfiehlt die Koreanische Patentschrift **KR 880002028 B1** (Bong) die Beschichtung von Kaffeepulver mit Ginsengaromen.

Die Aufgabe der vorliegenden Erfindung hat nun darin bestanden, für das eingangs geschilderte Problem eine möglichst einfache und zuverlässige Lösung zur Verfügung zu stellen.

### Beschreibung der Erfindung

Gegenstand der Erfindung sind wasserlösliche Kaffeezubereitungen, die sich dadurch auszeichnen, dass sie als Pulver vorliegen, bei denen die einzelnen Kaffeepartikel vollständig oder zumindest anteilig mit einem Überzug versehen sind, der sich in Wasser verzögert auflöst, wobei der Überzug mindestens 50 Gew.-% bezogen auf das Kaffeepulver ausmacht.

Überraschenderweise wurde gefunden, dass durch Überziehen der diskreten Partikel des Kaffeepulvers mit einer ausreichenden Menge eines in Wasser löslichen Kohlenhydrats die Löslichkeit des Kaffees im heißen Wasser, also beim Aufbrühen der Kaffeespezialität, so weit verzögert wird, so dass sich der Milchschaum bilden kann, ohne durch anteilig mitgelöste Kaffeeanteile bräunlich verfärbt zu werden.

### Kaffeepulver

Die Auswahl des Kaffeepulvers ist an sich nicht kritisch. Es kommen dafür grundsätzlich alle vermahlenen Kaffeezubereitungen in Betracht, wobei die Herkunft keine Rolle spielt, es sei denn, dies wäre für die gewünschte Geschmacksrichtung wichtig. Entscheidend für die geschmackliche Beurteilung des konfektionierten Endproduktes ist indes die Teilchengrößenverteilung der Pulver im Endprodukt. In einer bevorzugten Ausführungsform der Erfindung weisen die Kaffeepulver, die nach der Beschichtung erhalten werden, eine Partikelgrößenverteilung auf, nach der gilt, dass der D50-Wert etwa 0,2 bis etwa 1 mm aufweist. Gerade für Kaffeepads sollte der D50-Wert sich am unteren Ende befinden, also etwa 0,2 bis 0,4 mm betragen. Die Teilchenanalyse kann beispielsweise durch dynamische Bildverarbeitung ermittelt werden.

### Überzug

Der Überzug, mit dem die Kaffeepartikel beschichtet wird, besteht vorzugsweise aus einem löslichen Kohlenhydrat. Für diesen Zweck kommen Stoffe in Betracht, die ausgewählt sind aus der Gruppe, die gebildet wird von Monosacchariden, Disacchariden, unmodifizierten Stärken, chemisch modifizierten Stärken, hydrolysierten Stärken, Maltodextrinen, Gummi Arabicum und deren Gemischen.

Mono- und Disaccharide, die im Sinne der Erfindung in Betracht kommen, umfassen beispielsweise Triosen, Tetrosen, Pentosen, Hexosen und Heptosen in Betracht, wobei die Pentosen und Hexosen allein wegen ihrer Verfügbarkeit bevorzugt sind. Die in Betracht kommenden Stoffe sind im nachfolgenden **Formelschema 1** wiedergegeben. Unter diesen Stoffen sind Glucose und Mannose die bei weitem bevorzugten Spezies.

Unter den Disaccchariden sind insbesondere Cellubiose, Gentiobiose, Isomaltose, Isomaltulose, Lactose, Lactulose, Laminaribiose, Maltose, Maltulose, Melibiose, Neohesperidose, Neotrehalose, Nigerose, Rutinose, Sophorose, Saccharose und Trehalose zu nennen. Unter diesen Stoffen besitzen Saccharose und Maltose die größte Bedeutung.

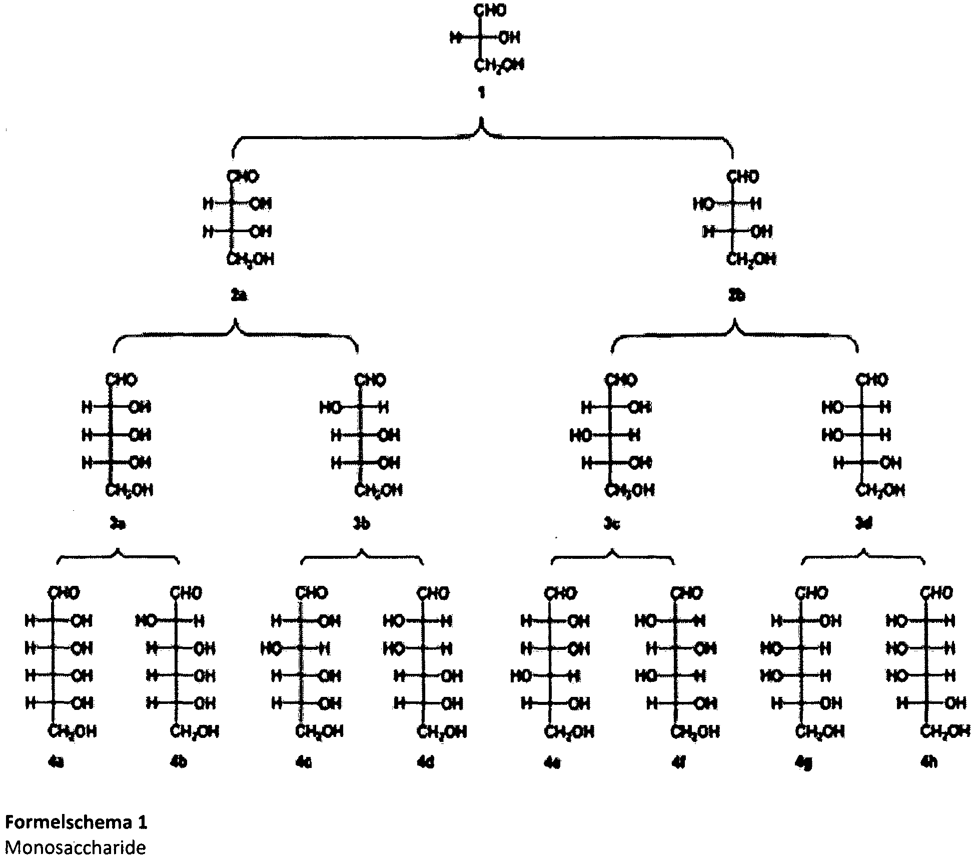

Neben den Mono- und Disacchariden kommen als Überzugskomponenten auch Stärken und Stärkeabbauprodukte in Frage, soweit diese für den Verzehr zugelassen sind. Für diesen Zweck eignen sich Stärken wie Mais-, Reis- oder Tapiokastärke sowie entsprechende Hydrolysate, die durch alkalischen oder enzymatischen Abbau bzw. Teilabbau erhalten werden. Unter den chemisch modifizierten Stärken sind insbesondere Carboxymethylstärken zu nennen.

Maltodextrine liegen in ihrer Molekülgröße zwischen Oligosacchariden und Stärke liegen. Üblicherweise kommen sie in Form von weißem bzw. hellgelbem Pulver vor. Sie werden hauptsächlich aus Weizen-, Kartoffel- und Maisstärke durch trockene Erhitzung (>150 °C) oder unter Säureeinwirkung gewonnen. In der Natur wird Dextrin zum Beispiel von *Bacteri-* 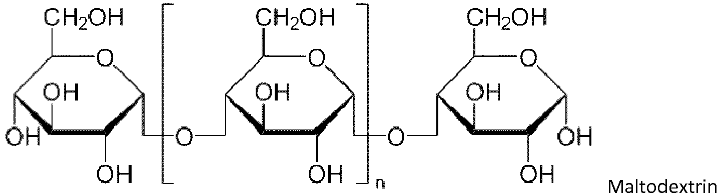 Maltodextrine, die in besonderer Weise geeignet sind, weisen etwa 3 bis etwa 20, vorzugsweise etwa 5 bis etwa 15 Dextrose-Äquivalente (DE) auf. Hierunter ist der prozentuale Anteil der reduzierenden Zucker in der Trockenmasse zu verstehen.

Der Einsatz von Gummi Arabicum ist ebenfalls bevorzugt, weil die so beschichteten Pulver besonders leicht trocknen. Hierbei handelt es sich hauptsächlich um eine Mischung der sauren Erdalkali- und Alkalisalze der Polyarabinsäure bzw. um verzweigte Polysaccahride, die aus L-Arabinose, D-Galactose, L-Rhamnose und D-Glucuronsäure im Verhältnis 3:3:1:1 bestehen.

In einer weiteren bevorzugten Ausführungsform kann der Überzug Lecithin, vorzugsweise Sojalecithin enthalten. Dies führt zu einer besonders stabilen Haftung.

Besonders bevorzugt sind Kaffeepulver, die mit einer Mischung aus Mono- oder Disaccchariden, Stärke und/oder Gummi Arabicum und Lecithin beschichtet werden. So hat sich eine Zubereitung für die Beschichtung als besonders vorteilhaft erwiesen, die etwa 1 bis etwa 20 g, vorzugsweise etwa 5 bis etwa 15 g und insbesondere etwa 5 bis etwa 10 g Lecithin pro kg Mono- oder Disaccharidlösung enthält. Ebenfalls bevorzugt enthalten solche Zubereitungen etwa 100 bis etwa 300 g, bevorzugt etwa 150 bis etwa 250 g und insbesondere etwa 100 g Reisstärke und/oder Tapiokastärke pro kg Mono- und/oder Disaccharidlösung. Das Gewichtsverhältnis Reis- zu Tapiokastärke liegt dabei in der Regel im Bereich von 1:5 bis 1:20 und insbesondere 1:7 bis 1:15. Unter einer Mono- und/oder Disaccharidlösung wird hier eine 50 bis 85 Gew.-%ige Lösung von Glucose und/oder Saccharose in Wasser verstanden. In diesem Sinne besonders bevorzugt ist ein Zuckersirup mit beispielsweise etwa 75 Brix.

In einer insgesamt bevorzugten Ausführungsform der Erfindung besteht der Überzug daher aus Glucose und/oder Saccharose gegebenenfalls in Kombination mit Stärken oder aus Maltodextrinen und/oder Gummi Arabicum.

Die Menge an eingesetztem Überzugsmaterial bezogen auf Kaffeepulver wird in der Regel so gewählt, dass sich bezogen auf die Feststoffanteile ein Gewichtsverhältnis von mindestens 50, vorzugsweise aber von etwa 80 bis etwa 250 Gew.-%, insbesondere von etwa 100 bis etwa 150 Gew.-% und besonders bevorzugt von etwa 110 bis 125 Gew.-%ergibt. Die beiden Bestandteile liegen also vorzugsweise in etwa gleichen Mengen vor. Auf diese Weise wird sichergestellt, dass nach der Beschichtung mindestens 50 Gew.-%, vorzugsweise mindestens 60 Gew.-% und insbesondere etwa 80 bis etwa 90 Gew.-% der Teilchen einen Überzug aus einem löslichen Kohlenhydrat aufweisen.

### Trocknung und Beschichtung im luftdurchströmten Trockner

Ein weiterer Gegenstand der vorliegenden Erfindung betrifft ein Verfahren zur Herstellung einer wasserlöslichen Kaffeezubereitung, bei dem man eine erste wässrige Zubereitung, die das Kaffeepulver enthält, mit einer zweiten wässrigen Zubereitung, die das lösliche Kohlenhydrat enthält, in einem luftdurchströmten Trockner trocknet, gegebenenfalls granuliert und gleichzeitig beschichtet. Zu diesem Zweck werden die wässrigen Ausgangsstoffe vorzugsweise als Lösungen bzw. Dispersionen gemeinsam oder voneinander getrennt in den Trockner eingebracht, beispielsweise indem sie über Düsen versprüht werden. Entsprechende Düsen, auch Mehrstoffdüsen, sind aus dem Stand der Technik hinreichend bekannt, beispielsweise aus der DE 10054359 A1 (Hüttlin).

Dabei ist es möglich, dass die Verweilzeit des zu trocknenden Ausgangsmaterials im Trockner sowohl durch den zur Trocknung verwendeten Luftstrom bzw. konstruktive Einbauten im Trockner, als auch über die Fördergeschwindigkeit der Fördervorrichtung und somit über die Abzugsgeschwindigkeit des Produkts aus dem Trockner gesteuert werden kann. Vorzugsweise erfolgt die Steuerung über die Geschwindigkeit der Fördervorrichtung, da dies eine besonders einfache und kostengünstige Betriebsweise darstellt.

Um zu verhindern, dass in der Anlaufphase des Trockners bereits noch nicht vollständig getrocknetes Ausgangsmaterial ausgetragen wird, wird gemäß einer praktischen Ausführungsform der Erfindung vorgeschlagen, dass im Bereich des Trocknerausgangs hin zur Ausgabebahn ein verstellbares Wehr derart angeordnet ist, dass das Wehr während einer Anlaufphase des Trockners vollständig geschlossen, nach Aufbau einer vorbestimmten Schichthöhe im Trockner schrittweise und nach Abschluss der Anlaufphase vollständig geöffnet wird.

Für die Produktivität oder die Produktionskapazität einer Wirbelschichttrocknungsanlage ist es sehr wichtig, dass die Anlage insgesamt im Bereich ihrer Vollbelegung gleichmäßig durchgefahren werden kann. Hierbei spielt die Belegung oder der Füllgrad der Ausgabevorrichtung als Bindeglied zwischen Trockner und Fördereinrichtung eine maßgebliche Rolle. Daher wird in einer Ausgestaltung des Verfahrens vorgesehen, dass beim Öffnen des Wehrs die Laufgeschwindigkeit der Fördereinrichtung derart gesteuert wird, dass eine vollständige Füllung der Ausgabevorrichtung gewährleistet ist.

Der Granulierprozeß ist von der Aufgabe des zu granulierenden Produkts in den Trockner bis zur Absiebung des Granulats ein integriert zu betrachtender Prozess. Durch die Siebung wird die Qualität des Produktes maßgeblich beeinflusst. Die Fahrweise des Siebes bestimmt auf der anderen Seite die Produktion der gesamten Verfahrensstufe. Daher ist es von entscheidender Bedeutung, das Sieb voll auszulasten und gleichmäßig zu betreiben. Da das Sieb von der Fördervorrichtung beschickt wird, andererseits die Verweilzeit des Ausgangsmaterials im Trockner über die Laufgeschwindigkeit der Fördereinrichtung gesteuert wird, kann die Berücksichtigung der Siebbelegung auch die Zugabemenge von zu granulierendem Ausgangsmaterial bestimmen. Daher wird in einer besonders vorteilhaften Ausgestaltung des Verfahrens vorgesehen, bei der Steuerung der Laufgeschwindigkeit der Fördervorrichtung zusätzlich eine gleichmäßige Vollauslastung des nachgeschalteten Siebes zu berücksichtigen und erforderlichenfalls die Zudosierung des zu granulierenden Ausgangsproduktes zur Einhaltung der vorbestimmten Granulathöhe im Trockner zu regeln.

Die Vorrichtung zur Trocknung von Granulaten nach dem erfindungsgemäßen Verfahren zeichnet sich dadurch aus, dass die Ausgabevorrichtung als Rutsche, das heißt in Form einer Schurre, ausgebildet ist. Diese Schurre ist in bevorzugten Ausführungsformen der vorliegenden Erfindung im Querschnitt U-förmig. Um Anbackungen in der Schurre zu vermeiden, kann diese mit Kunststoffauskleidungen oder luftdurchströmten Blechen versehen werden. Auch der Einsatz von Tüchern, die - wie beispielsweise auch die Kunststoffauskleidungen - mechanisch oder mit Druckluft bewegt werden können, ist möglich. Durch die Ausbildung der Ausgabevorrichtung als einfache Schurre ist es möglich, die zur Fördervorrichtung hin geneigte Ausgabevorrichtung ausgehend vom Trockner vollständig mit Granulat zu füllen, so dass beim Betrieb der Fördervorrichtung das auf der Ausgabevorrichtung befindliche Granulat mittels der Fördervorrichtung abtransportiert wird und gleichzeitig aus dem Trockner neues Granulat auf die geneigte Ausgabevorrichtung gelangt. Auf diese Weise ist es somit möglich, den Abzug des Granulats aus dem Trockner und somit die Verweilzeit des zu trocknenden Ausgangsmaterials im Trockner allein durch die Laufgeschwindigkeit des Förderbandes zu steuern. Zweckmäßig wird im Bereich des Trockneraustrags hin zur Ausgabevorrichtung ein verstellbares Wehr vorgesehen.

Gemäß einer weiteren Ausführungsform der Erfindung wird vorgeschlagen, dass der Trockner als rotierende Trommel ausgebildet ist und dass die Laufgeschwindigkeit der Fördereinrichtung im Verhältnis zur Drehgeschwindigkeit der Trocknertrommel einstellbar ist. Durch diese Einstellung der Laufgeschwindigkeit der Fördereinrichtung und somit der Abzugsgeschwindigkeit des getrockneten Granulats aus der Trommel im Verhältnis zur Umdrehungsgeschwindigkeit der Trommel lässt sich bei bekanntem Feuchtigkeitsgehalt des Ausgangsmaterials und bekannter Trockenluftströmung die Vorrichtung so einstellen, dass das Granulat einen jeweils möglichst gleichmäßigen Feuchtigkeitsgehalt aufweist. Schließlich wird mit der Erfindung vorgeschlagen, dass der Trockner als Wirbelschichttrockner ausgebildet ist. Die Ausbildung als Wirbelschichttrockner ermöglicht eine schnelle, gleichmäßige und kostengünstige Trocknung des feuchten Ausgangsmaterials.

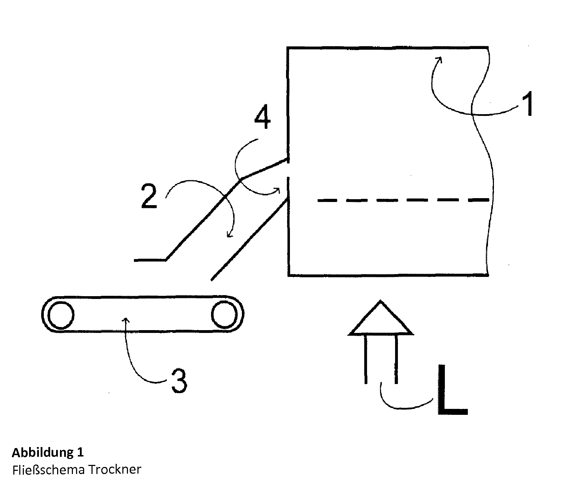

Eine solche Vorrichtung bestehend aus einem Trockner **(1)**, einer ausgangsseitig am Trockner angeordneten, als Schurre **(2)** ausgebildeten, Ausgabevorrichtung sowie einer Fördervorrichtung **(3)** zum Abtransport des über die Schurre aus dem Trockner ausgetragenen Granulats ist beispielhaft in **Abbildung 1** wiedergegeben.

Zur Trocknung des Ausgangsprodukts wird dem beispielsweise als rotierende Trommel ausgebildeten Trockner das feuchte Ausgangsmaterial zugeführt und innerhalb des Trockners mittels eines Luftstroms L getrocknet. Das über die Fördervorrichtung abtransportierte Granulat wird nachfolgenden, nicht dargestellten Sieben verschiedener Maschengröße zugeführt, um ein Produkt in gleichmäßigem Korngrößenband herzustellen.

Zu Beginn des Prozesses steht die Fördervorrichtung still, bis die Schurre vollständig mit dem auszutragenden Granulatprodukt gefüllt ist. Anschließend wird die Fördervorrichtung angestellt, um das Granulat abzutransportieren. Durch den Betrieb der Fördervorrichtung wird das so auf der Schurre 2 aufgestaute Granulatprodukt abtransportiert, während nachfolgend aus dem Trockner neu gebildetes Granulat fortwährend der Schurre zugeführt wird. Über die Fördergeschwindigkeit der Fördervorrichtung lässt sich somit auf einfache Weise die Entleerungsgeschwindigkeit des Trockners und somit die Verweilzeit des zu trocknenden Ausgangsmaterials im Trockner 1 steuern.

Durch das vollständige öffnen des Wehres **(4)** nach Beendigung der Anlaufphase kommt es nicht mehr zu einer Aufgranulation von Grobanteilen im Trockner. Ferner ist es über die Steuerung der Fördergeschwindigkeit der Fördervorrichtung möglich, den Füllgrad des Trockners konstant zu halten und die Beaufschlagung der der Fördereinrichtung nachgeschalteten Siebe gleichmäßiger zu gestalten.

Insgesamt zeichnet sich somit die voranstehend beschriebene Vorrichtung dadurch aus, dass der Trocknungsprozess auch bei einem empfindlichen Produkt wie Kaffee so gefahren werden kann, dass es nicht zur Aufgranulation von Grobanteilen kommt, die eine vorzeitige Reinigung des Trockners erforderlich machen. Weiterhin ist es durch die gezielte Steuerung der Verweilzeit des Ausgangsmaterials im Trockner über die Einstellung der Fördergeschwindigkeit der Fördervorrichtung möglich, die der Fördereinrichtung nachgeschalteten Siebe gleichmäßiger mit dem Granulatprodukt zu beaufschlagen und so nahezu optimal auszulasten.

Neben der dargestellten Ausführungsform des Trockners als rotierende Trommel ist es auch möglich, den Trockner in anderer Form, z. B. als Wirbelschichttrockner, auszubilden. Unter einer Wirbelschicht versteht man eine Schüttung von Feststoffpartikeln, welche durch eine aufwärtsgerichtete Strömung eines Fluids in einen fluidisierten Zustand versetzt wird. Wirbelschichten weisen daher flüssigkeitsähnliche Eigenschaften auf. So bildet sich, wie bei Wasser, stets eine horizontale Oberfläche aus. So sinken in einem Wirbelbett Objekte mit höherer Dichte als das Bett ab, während Objekte mit geringerer Dichte schwimmen (Archimedisches Prinzip). Da sich die Dichte - besser: der Feststoffvolumenanteil im Gemisch - des Wirbelbettes mit der Fluidisierungsgeschwindigkeit ändert, können Objekte mit ähnlicher Dichte wie das Wirbelbett durch Änderung der Fluidisierungsgeschwindigkeit zum Absinken bzw. Wiederauftauchen gebracht werden. In Wirbelschichten kommt es zu einem engen Kontakt des Wirbelgutes (Feststoffpartikel) mit dem Wirbelmedium (Fluid: Gas oder Flüssigkeit) und zu lebhaften Platzwechseln der einzelnen Partikel nach allen Richtungen. Dies wird dazu genutzt, um empfindliche Stoffe gleichzeitig schonend zu trocknen und mit Trägerstoffen zu beschichten.

Die Ausführungsform des Trockners als Wirbelschichttrockner ist im Rahmen der vorliegenden Erfindung bevorzugt. Der Wirbelschichttrockner kann dabei erfindungsgemäß in verschiedene Zonen aufgeteilt werden, wobei sowohl die Luftmenge, die die einzelne Zone durchströmt, als auch die Temperatur in den einzelnen Zonen frei gewählt werden können. Bei der Aufteilung des Trockners in Zonen ist es besonders bevorzugt, dass in den ersten Zonen getrocknet und in den letzten Zonen gekühlt wird.

Bevorzugt im Rahmen der vorliegenden Erfindung sind Wirbelschichttrockner, bei denen das zu trocknende Material durch gerichtete Luftströmung, durch Neigung oder durch Vibration zur Ausgabevorrichtung **(2)** transportiert wird. Die Bodenplatte eines solcherart ausgestalteten Wirbelschichttrockners kann dabei geneigt sein, wobei der Winkel vorteilhaft zwischen größer/gleich 0 und weniger als 10° liegt. Es ist aber auch möglich, die Bodenplatte mit Öffnungen zu versehen, die den Durchtritt eines Luftstroms in Richtung auf die Ausgabevorrichtung hin ermöglichen. Ebenfalls möglich ist die Ausgestaltung des Bodens als Loch- oder Ventilboden bei bewegtem Trockner (Vibrationswirbelschicht).

### Beschichtung durch Dragierung

In einer weiteren alternativen Ausführungsform der Erfindung können die Kaffeepulver mit den löslichen Kohlenhydraten über den Weg der Dragierung überzogen werden. Hierunter versteht man in der Regel ein Verfahren, bei dem man eine Süßigkeit oder Pille mit einem Überzug versieht, der bei dem Medikament zur Verbesserung des Geschmacks dient und aus Zucker besteht. Im Sinne der vorliegenden Erfindung wird dieses Verfahren indes angewendet, um die Kaffeepulver Schicht für Schicht mit einem Überzug aus löslichen Kohlenhydraten zu versehen.

Die Dragierung findet vorzugsweise in einem Kessel statt, in dem das zu dragierende Gut - also das Kaffeepulver - trocken, vorzugsweise aber zumindest angefeuchtet vorgelegt und dann portionsweise mit der Trägerlösung versetzt und getrocknet wird. Durch mehrfaches Wiederholen des Vorgangs wird eine besonders dicke Schicht erzeugt, die dann erwünscht ist, wenn die Freisetzung des Kaffeepulvers um mehr als 10 Sekunden verzögert werden soll.

### Gewerbliche Anwendbarkeit

Zwei weitere Gegenstände, die von der vorliegenden Erfindung umschlossen werden, betreffen zum einen eine Pulvermischung zum Auflösen in heißem Wasser und zum anderen eine Kaffeekapsel oder Kaffeepad zum Einlegen in eine Kaffeemaschine, die nach dem Nespresso-System arbeitet, die die löslichen Kaffeezubereitungen sowie ein Milchschaumpulver enthalten.

Unter dem Begriff Nespresso-technologie ist dabei als zentrales Element bei der Zubereitung des Kaffee eine Kapsel oder ein Pad, vorzugsweise eine Aluminumkapsel zu verstehen, innerhalb der der gesamte Brühvorgang stattfindet. Beim Einlegen der Kapsel in die Maschine wird diese vom Kapselkäfig umschlossen, unten gegen eine sogenannte Pyramidenplatte gedrückt und von oben von drei Dornen durchstochen. Beim Starten des Brühvorganges wird in der Maschine zubereitetes, heißes Wasser mit hohem Druck in die Kapsel gepresst. Sobald der Druck innerhalb der Kapsel hoch genug geworden ist, hält die Alumimum-Membrane an der Unterseite der Kapsel diesem nicht mehr Stand und reißt ein. Der innerhalb der Kapsel gebrühte Kaffee kann nun durch die so perforierte Membrane und die Löcher der Pyramidenplatte ausfließen.

### Beispiele

### Herstellbeispiel H1

### Herstellung durch Wirbelschichtrocknung

200 g eines handelsüblichen Kaffeepulvers wurden in wenig Wasser vorgelegt, auf eine Temperatur von 50 °C erwärmt und gerührt bis eine homogene Mischung entsteht. Danach wurde eine Trägerkomponente aus bestehend aus 200 g Saccharose gelöst in 500 ml Wasser bereitgestellt und ebenfalls auf 50°C erwärmt. Anschließend wurde die Aufschlämmung des Kaffeepulvers in der Saccharoselösung dispergiert und das gesamte Gemisch in einen Wirbelschichttrockner gegeben, wobei die Temperatur auf 80 bis 90 °C eingestellt wurde.

### Herstellbeispiel H2

### Herstellung durch Wirbelschichtrocknung

200 g eines handelsüblichen Kaffeepulvers wurden in wenig Wasser vorgelegt, auf eine Temperatur von 50 °C erwärmt und gerührt bis eine homogene Mischung entsteht. Danach wurde eine Trägerkomponente aus bestehend aus 200 g eines Zuckersirups mit 75 Brix bereitgestellt und ebenfalls auf 50°C erwärmt. Anschließend wurde die Aufschlämmung des Kaffeepulvers in der Saccharoselösung dispergiert und das gesamte Gemisch in einen Wirbelschichttrockner gegeben, wobei die Temperatur auf 80 bis 90 °C eingestellt wurde.

### Herstellbeispiel H3

### Herstellung durch Wirbelschichtrocknung

200 g eines handelsüblichen Kaffeepulvers wurden in wenig Wasser vorgelegt, auf eine Temperatur von 50 °C erwärmt und gerührt bis eine homogene Mischung entsteht. Danach wurde eine Trägerkomponente aus bestehend aus 150 g Saccharose, 40 g einer Mischung aus Reisstärke und Tapiokastärke (1:3) sowie 10 g Sojalecithin gelöst in 500 ml Wasser bereitgestellt und ebenfalls auf 50°C erwärmt. Anschließend wurde die Aufschlämmung des Kaffeepulvers in der Trägerlösung dispergiert und das gesamte Gemisch in einen Wirbelschichttrockner gegeben, wobei die Temperatur auf 80 bis 90 °C eingestellt wurde.

### Herstellbeispiel H4

### Herstellung durch Wirbelschichtrocknung

200 g eines handelsüblichen Kaffeepulvers wurden in wenig Wasser vorgelegt, auf eine Temperatur von 50 °C erwärmt und gerührt bis eine homogene Mischung entsteht. Danach wurde eine Trägerkomponente aus bestehend aus 150 g Maltodextrin, 40 g Gummi Arabicum sowie 10 g Sojalecithin gelöst in 500 ml Wasser bereitgestellt und ebenfalls auf 50°C erwärmt. Anschließend wurde die Aufschlämmung des Kaffeepulvers in der Trägerlösung dispergiert und das gesamte Gemisch in einen Wirbelschichttrockner gegeben, wobei die Temperatur auf 80 bis 90 °C eingestellt wurde.

### Herstellbeispiel H5

### Herstellung durch Dragierung

In einem rotierenden Dragierkessel (Erweka AR 401, Geschwindigkeit 250 UpM) wurden 200 g eines handelsüblichen Kaffeepulvers wurden in wenig Wasser vorgelegt und mit 20 g Glucose in 50 ml Wasser versetzt. Sobald die Einlagen vollständig durchmischt waren, wurde mit Luft getrocknet bis die Pulver staubig angelaufen waren (ca. 15 min). Anschließend wurde die nächste Schicht aufgetragen. Die Menge an Saccharoselösung pro Schicht wurde individuell in Bezug darauf ermittelt, dass die Einlagen vollständig benetzt sein mussten, aber nicht zu nass werden durften, um eine Agglomeration zu vermeiden. Der Vorgang wurde daher etwa 10mal wiederholt. Die Gesamtzeit für die Auftragung der Schichten betrug etwa 30 min.

### Anwendungstechnische Beispiele 1 bis 5

In einer ersten Testreihe wurden jeweils 10 g der nach den Herstellbeispielen H1 bis H5 erhaltenen beschichteten Kaffeepulver bei 60 °C in 100 ml Wasser aufgelöst und die Braunfärbung der Lösung zeitlich verfolgt. In einer zweiten Testreihe wurden den Zubereitungen noch jeweils 7 g Milchschaumpulver zugegeben und verfolgt, ob sich der Milchschaum bräunlich verfärbte.

Die Ergebnisse sind in **Tabelle 1** wiedergegeben. Als T1 wird die Zeitspanne ab dem Einbringen des Pulvers bezeichnet, an der die erste Färbung wahrnehmbar wurde, als T2 die Zeitspanne bis das Kaffeepulver vollständig gelöst war. Als Vergleichsstandard diente das gleiche unbeschichtete Kaffeepulver.

**Tabelle 1**

| Löslichkeitsversuche | | | | |
|---|---|---|---|---|
| **Bsp.** | **Kaffeepulver** | **T1 [s]** | **T1 [s]** | **Verfärbung** |
| C | Unbeschichtet | 5 | 10 | deutlich |
| 1 | H1 | 10 | 18 | sehr gering |
| 2 | H2 | 12 | 22 | keine |
| 3 | H3 | 12 | 23 | keine |
| 4 | H4 | 14 | 25 | keine |
| 5 | H5 | 17 | 27 | keine |

Alle Kaffeeproben wurden anschließend geschmacklich beurteilt. Keine davon zeigte eine Fehlnote.

## Patentansprüche

1. Wasserlösliche Kaffeezubereitungen, **dadurch gekennzeichnet, dass** sie als Pulver vorliegen, bei denen die einzelnen Kaffeepartikel vollständig oder zumindest anteilig mit einem Überzug versehen sind, der sich in Wasser verzögert auflöst, wobei der Überzug mindestens 50 Gew.-% bezogen auf das Kaffeepulver ausmacht.

2. Zubereitungen nach Anspruch 1, **dadurch gekennzeichnet, dass** das Kaffeepulver eine Teilchengrößenverteilung mit einem D50-Wert im Bereich von 0,2 bis 1 mm aufweist.

3. Zubereitungen nach den Ansprüchen 1 und/oder 2, **dadurch gekennzeichnet, dass** der Überzug aus einem löslichen Kohlenhydrat besteht.

4. Zubereitungen nach Anspruch 3, **dadurch gekennzeichnet, dass** das lösliche Kohlenhydrat ausgewählt ist aus der Gruppe, die gebildet wird von Monosacchariden, Disacchariden, unmodifizierten Stärken, chemisch modifizierten Stärken, hydrolysierten Stärken, Maltodextrinen, Gummi Arabicum und deren Gemischen.

5. Zubereitungen nach mindestens einem der Ansprüche 1 bis 4, **dadurch gekennzeichnet, dass** der Überzug aus Glucose und/oder Saccharose besteht.

6. Zubereitungen nach mindestens einem der Ansprüche 1 bis 5, **dadurch gekennzeichnet, dass** der Überzug aus Glucose und/oder Saccharose sowie Stärke besteht.

7. Zubereitungen nach mindestens einem der Ansprüche 1 bis 5, **dadurch gekennzeichnet, dass** der Überzug aus Maltodextrin und/oder Gummi Arabicum besteht.

8. Zubereitungen nach mindestens einem der Ansprüche 1 bis 7, **dadurch gekennzeichnet, dass** der Überzug weiterhin Lecithin enthält.

9. Zubereitungen nach mindestens einem der Ansprüche 1 bis 8, **dadurch gekennzeichnet, dass** der Überzug bezogen auf das Kaffeepulver 80 bis 120 Gew.-% beträgt.

10. Zubereitungen nach mindestens einem der Ansprüche 1 bis 9, **dadurch gekennzeichnet, dass** mindestens 50 Gew.-% der Teilchen einen Überzug aus einem löslichen Kohlenhydrat aufweisen.

11. Verfahren zur Herstellung einer wasserlöslichen Kaffeezubereitung, bei dem man eine erste wässrige Zubereitung, die das Kaffeepulver enthält, mit einer zweiten wässrigen Zubereitung, die das lösliche Kohlenhydrat enthält, in einem luftdurchströmten Trockner trocknet und gleichzeitig beschichtet.

12. Verfahren nach Anspruch 11, **dadurch gekennzeichnet, dass** der Trockner ein Wirbelschichttrockner ist.

13. Verfahren zur Herstellung einer wasserlöslichen Kaffeezubereitung, bei dem man das Kaffeepulver mit einer wässrigen Zubereitung, die das lösliche Kohlenhydrat enthält, dragiert.

14. Pulvermischung zum Auflösen in heißem Wasser, enthaltend die lösliche Kaffeezubereitung nach Anspruch 1 sowie ein Milchschaumpulver.

15. Kaffeekapsel oder Kaffeepad zum Einlegen in eine Kaffeemaschine, die nach dem Nespresso-System arbeitet, enthaltend die lösliche Kaffeezubereitung nach Anspruch 1 sowie ein Milchschaumpulver.
